# EUROPEAN PATENT APPLICATION

(11) **EP 3 333 792 A1**
(43) Date of publication of application: **13.06.2018**
(21) Application number: 15900152.8
(22) Date of filing: 27.08.2015
(51) Int. Cl.: G06Q 30/02

(54) **GEOGRAPHICAL POSITION-BASED INTERNET OUTDOOR ADVERTISEMENT DELIVERING SYSTEM AND DELIVERING METHOD**

(30) Priority: 03.08.2015 CN 201510481384
(71) Applicant: Shanghai Bihu Network Technology Co., Ltd, Shanghai 200063 (CN)
(72) Inventor: WANG, Jianfeng, Shanghai 200063 (CN); ZHANG, Xiaolin, Shanghai 200063 (CN)
(74) Representative: D'Halleweyn, Nele Veerle Trees Gertrudis
(86) International application number: PCT/CN2015/088320
(87) International publication number: WO 2017/020378

(57) **Abstract**

The present invention discloses a geographical position-based Internet outdoor advertisement delivery system and method, the system comprising a platform, a mobile terminal, and a cloud server. The platform comprises an agent Web platform, an advertiser Web platform and a background management Web platform, wherein the advertiser Web platform is connected to the agent Web platform and the background management Web platform via a Web server. The mobile terminal possesses a function of locating based on a geographical position, and the mobile terminal is connected to a smart outdoor advertisement terminal by means of hotspot network sharing. The cloud server comprises a Web server, a database server and a DSP mobile cloud server connected in sequence, wherein the Web server is connected to the agent Web platform, the advertiser Web platform and the background management Web platform, respectively; the DSP mobile cloud server is connected to several mobile terminals via a network and transmits data to the database server; and the Web server platform divides an advertisement delivery region into a plurality of delivery areas and sends, to each of the mobile terminals via the DSP mobile cloud server, information about an advertisement that each of the mobile terminals should deliver.

## Description

### Technical Field

The present invention relates to a geographical position-based Internet outdoor advertisement delivery system and delivery method.

### Background

Traditional outdoor advertisement marketing methods have low cost performance. The population covered by advertisements delivered by users is limited. Most billboards rely on a certain business circle or a landmark building. This outdoor advertisement mode is costly because the users delivering the advertisements actually bear the costs incurred by the billboards, such as rent, depreciation, and idle costs, resulting in a high price.

Furthermore, under the limitation of the technical operation mode, the potential of advertisement contents cannot be fully released. At present, the delivery of domestic outdoor electronic advertisements relies on LCD and LED technologies. Specifically, to improve the effect, the energy consumption must be increased, which results in high costs and goes against environmental protection. The shortcoming of fuzziness fundamentally has a huge damage to the effect of advertisement contents.

In addition, the delivery modes are slightly extensive. It may not be necessary for a user to rent a billboard the whole day, and a company that rents the billboard half a day does not necessarily have a lower conversion rate than the former. In other words, an advertisement space leasing company that does not have any technical and data accumulation is not responsible for the conversion rate, and advertisement expenses of many users are wasted. In short, these shortcomings indicate the road and direction for future development to pioneers.

Further, traditional regional division modes are all based on regions. Using Shanghai as an example, Pudong New Area, Minhang District, Songjiang District, etc. are all relatively large districts, and when advertisers select an area to deliver an advertisement, they often intend to deliver the advertisement in only a small range within a designated area. In this case, the traditional modes seem inflexible, and is poor in user experience. From the perspective of the value of advertisement delivery, delivery in the entire district often needs a large number of advertisement funds to be invested, but the actual effect is not desirable. In the current market, there is also a division method based on popular business areas. Still using Shanghai as an example, there are many business areas such as People's Square, Xujiahui, and Jing'an Temple and the flexibility of choice seems greater; however, if an advertiser needs to deliver an advertisement in a designated area instead of a business area, there is no choice at this time, and the usage effect is still too poor.

### Summary of the Invention

Due to the above-mentioned problems existing in the prior art, the present invention proposes a geographical position-based Internet outdoor advertisement delivery system and method, for the purpose of effectively solving the problems of high costs and delivery region limitations existing in current advertisement delivery.

The present invention solves the above-mentioned problems by means of the following technical solutions:
A geographical position-based Internet outdoor advertisement delivery system, comprising a platform terminal, a mobile terminal and a cloud service terminal, wherein the platform terminal comprises an agent Web platform, an advertiser Web platform and a background management Web platform, wherein the advertiser Web platform is connected to the agent Web platform, an agent provides advertisement design and bidding services to the advertiser via the agent Web platform, and the background management Web platform collects data and then performs statistics on same, so as to examine advertisements, members and operations of functions, such as advertiser or agent management, and reporting; several mobile terminals possess a geographical position-based service function, wherein the mobile terminal is connected to a smart outdoor advertisement terminal by means of hotspot network sharing, feeds information about a geographical position at which the mobile terminal is located back to the cloud service terminal, and receives advertisement information sent by the cloud service terminal and then delivers the advertisement information via the smart outdoor advertisement terminal; and the cloud service terminal comprises a Web server, a database server and a DSP cloud server connected in sequence, wherein the Web server is connected to the agent Web platform, the advertiser Web platform and the background management Web platform respectively, and the Web server integrates information about the agent and the advertiser and an advertisement and pricing thereof and then provides same to the database server; the DSP cloud server is connected to the several mobile terminals via a network, and continuously receives locating information sent by the mobile terminals and then determines in real time which delivery area the geographical position where the mobile terminal is located belongs to and then transmits the data to the database server; and the Web server divides an advertisement delivery region into a plurality of delivery areas, screens and determines, by using the information transmitted by the Web server, an advertisement that should be delivered in each of the delivery areas, and then controls the DSP cloud server so that same sends, to each of the mobile terminals, the advertisement information that each of the mobile terminals should deliver.

The smart outdoor advertisement terminal comprises an automobile projection display arranged on an automobile, a smart liquid crystal billboard arranged in a public place, and various kinds of outdoor LED billboards.

The present invention also discloses a delivery method for a geographical position-based Internet outdoor advertisement delivery system, comprising the following steps:
in the first step, the Web server dividing an advertisement delivery region into a plurality of small square delivery areas and then publishing an advertisement regional bidding message to the advertiser Web platform;
in the second step, the advertiser Web platform providing advertisement design and advertisement bidding services, the advertiser Web platform confirming a delivery region and then transmitting same to the Web server, and the Web server analysing advertisement data and then providing quote information about the submitted advertisement for the advertiser Web platform;
in the third step, each of the mobile terminals continuously feeding a geographical position at which the mobile terminal is located back to the cloud service terminal, the DSP cloud server continuously accepting and determining the geographical position at which the mobile terminal is located and determining in real time which delivery area the geographical position where the mobile terminal is located belongs to and then transmitting same to the Web server via the database server, and the Web server designating advertisement information delivered by the mobile terminal and then sending same to the mobile terminal via the DSP cloud server; and
in the fourth step, the mobile terminal receiving the advertisement information transmitted by the DSP cloud server, and sending same to the smart outdoor advertisement terminal for projection.

In comparison, the geographical position-based Internet outdoor advertisement delivery system of the present invention enables a user to deliver outdoor advertisements for profits only needing a smart outdoor advertisement terminal and a smart phone, and is low in cost and high in return. In view of the situation of monotonous advertisement operation mode, the system of the present invention uses an advertisement mode of a projector projecting a picture and directly delivering an advertisement picture in a slide mode, under which the energy consumption of the projector is low, and the innovation of the advertisement mode is added while ensuring the travelling safety. Moreover, the advertisement delivery method of the present invention is a geographical position-based outdoor advertisement delivery mode, and can customize, for users, personalized advertisements in different regions and deliver advertisements in a more environmentally-acceptable manner as compared to monotonous and fixed outdoor advertisement modes, thereby bringing a higher and more effective conversion rate of such delivery effect.

### Brief Description of the Drawings

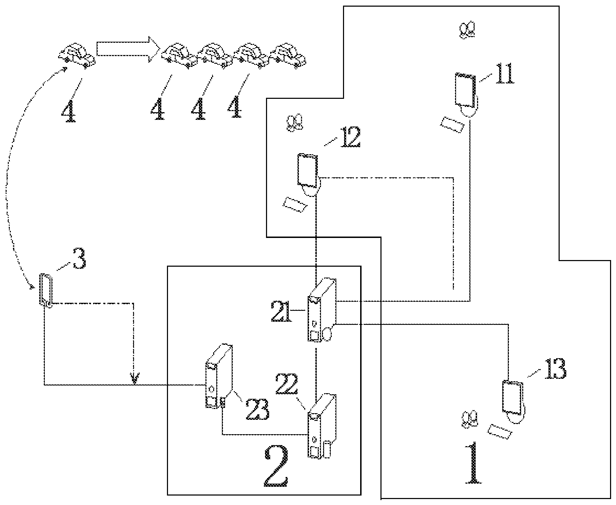

FIG. 1 is a flowchart of steps of a delivery method for a geographical position-based Internet outdoor advertisement delivery system according to the present invention.

### Detailed Description of the Drawings

The present invention is described in detail below in conjunction with the specific embodiments.

A geographical position-based Internet outdoor advertisement delivery system comprises a platform terminal 1, a mobile terminal 3 and a cloud service terminal 2.

The platform end 1 comprises an agent Web platform 11, an advertiser Web platform 12 and a background management Web platform 13. The advertiser Web platform 12 is connected to the agent Web platform 11, and an agent provides advertisement design and bidding services to the advertiser via the agent Web platform 11. The background management Web platform 13 collects data and then performs statistics on same, so as to examine advertisements, members and operations of functions, such as advertiser or agent management, and reporting.

Several mobile terminals 3 possess a geographical position-based service function, and an APP is installed on the mobile terminal, so that the mobile terminals can be respectively connected to a smart outdoor advertisement terminal 4 by means of hotspot network sharing. The mobile terminal 3 feeds information about a geographical position at which the mobile terminal is located back to the cloud service terminal 2, and receives advertisement information sent by the cloud service terminal and then delivers the advertisement information via the smart outdoor advertisement terminal.

The cloud service terminal 2 comprises a Web server 21, a database server 22 and a DSP cloud server 23 connected in sequence. The Web server 21 is connected to the agent Web platform 11, the advertiser Web platform 12 and the background management Web platform 13, respectively. The Web server 21 integrates information about the agent and the advertiser and an advertisement and pricing thereof and then provides same to the database server 22. The DSP cloud server 23 is connected to the several mobile terminals 3 via a network, and continuously receives locating information sent by the mobile terminal and then determines in real time which delivery area the geographical position where the mobile terminal is located belongs to and then transmits the data to the database server 22. The Web server 21 divides an advertisement delivery region into a plurality of delivery areas, screens and determines, by using the information transmitted by the Web server 21, an advertisement that should be delivered in each of the delivery areas, and then controls the DSP cloud server 23 so that same sends, to each of the mobile terminals 3, the advertisement information that each of the mobile terminals 3 should deliver. The Web server dividing the advertisement delivery region into a plurality of small square delivery areas is taking every 0.2 longitude and every 0.2 latitude as one unit based on the existing counties/districts, that is, as one delivery area. Further, based on this method, a private advertisement delivery map may be drawn by using html5+jquery technology, using php as a background, using Nginx as a server, and using canvas to dynamically generate a plurality of charts.

In addition, the smart outdoor advertisement terminal comprises an automobile projection display arranged on an automobile, a smart liquid crystal billboard arranged in a public place, and various kinds of outdoor LED billboards.

The present invention also discloses a delivery method for a geographical position-based Internet outdoor advertisement delivery system, comprising the following steps:
in the first step, the Web server 21 dividing an advertisement delivery region into a plurality of small square delivery areas and then publishing an advertisement regional bidding message to the advertiser Web platform 12;
in the second step, the advertiser Web platform 12 providing advertisement design and advertisement bidding services, the advertiser Web platform 12 confirming a delivery region and then transmitting same to the Web server 21, and after the Web server 21 analyses advertisement data, providing quote information about the submitted advertisement for the advertiser Web platform 12;
in the third step, each of the mobile terminals 3 continuously feeding a geographical position at which the mobile terminal 3 is located back to the cloud service terminal 2, the DSP cloud server 23 continuously accepting and determining the geographical position at which the mobile terminal is located and determining in real time which delivery area the geographical position where the mobile terminal is located belongs to and then transmitting same to the Web server 21 via the database server 22, and the Web server 21 designating advertisement information delivered by the mobile terminal and then sending same to the mobile terminal 3 via the DSP cloud server 23; and
in the fourth step, the mobile terminal 3 receiving the advertisement information transmitted by the DSP cloud server, and sending same to the smart outdoor advertisement terminal 4 for projection.

The present invention positions, based on an LBS locating function of the mobile terminal, that is, a position-based service, a region where a user is located by means of the cloud service terminal, and pushes an advertisement package for the region for delivery at the device end, thereby realizing an outdoor advertisement delivery mode. In comparison, the geographical position-based Internet outdoor advertisement delivery system of the present invention enables a user to deliver outdoor advertisements for profits only needing a smart outdoor advertisement terminal and a smart phone, and is low in cost and high in return. In view of the situation of monotonous advertisement operation mode, the system of the present invention uses an advertisement mode of a projector projecting a picture and directly delivering an advertisement picture in a slide mode, under which the energy consumption of the projector is low, and the innovation of the advertisement mode is added while ensuring the travelling safety. Moreover, the advertisement delivery method of the present invention is a geographical position-based outdoor advertisement delivery mode, and can customize, for users, personalized advertisements in different regions and deliver advertisements in a more environmentally-acceptable manner as compared to monotonous and fixed outdoor advertisement modes, thereby bringing a higher and more effective conversion rate of such delivery effect.

After using the method for geographically dividing a delivery area of the present application, a user can autonomously select multiple areas or a single area from delivery areas within the same city without being limited by region division. For advertisers, a prominent return can be obtained only needing to invest a small amount of money.

It should be understood that these embodiments are only for illustrating the present invention and are not intended to limit the scope of the present invention. In addition, it should be understood that after reading the teaching contents of the present invention, those skilled in the art can make various changes or modifications to the present invention, and these equivalent forms also fall within the scope defined by the appended claims of present application.

## Claims

1. A geographical position-based Internet outdoor advertisement delivery system, **characterized in that** the system comprises a platform, a mobile terminal and a cloud server, wherein
the platform comprises an agent Web platform, an advertiser Web platform and a background management Web platform, wherein the advertiser Web platform is connected to the agent Web platform, an agent provides advertisement design and bidding services to the advertiser via the agent Web platform, and the background management Web platform performs data collecting and statistics, so as to realize the functions of auditing advertisements, managing members, advertisers or agents, and reporting;
several mobile terminals possess a geographical position-based service function, wherein the mobile terminal is connected to a smart outdoor advertisement terminal by means of hotspot network sharing, feeds information about a geographical position at which the mobile terminal is located back to the cloud server, and receives advertisement information sent by the cloud server and then delivers the advertisement information via the smart outdoor advertisement terminal; and
the cloud server comprises a Web server, a database server and a DSP mobile cloud server connected in sequence, wherein the Web server is respectively connected to the agent Web platform, the advertiser Web end and the background management Web platform, and the Web server integrates information about the agent and the advertiser and an advertisement and pricing thereof and then provides the information about the agent and the advertiser and the advertisement and pricing thereof to the database server; the DSP mobile cloud server is connected to the several mobile terminals via a network, and continuously receives locating information sent by the mobile terminals and then determines in real time which delivery area the geographical position where the mobile terminal is located belongs to and then transmits the data to the database server; and the Web server divides an advertisement delivery region into a plurality of delivery areas, the user screens and determines advertisements that should be delivered in each of the delivery areas by using the information transmitted by the Web server, and the Web server controls the DSP mobile cloud server to send, to each of the mobile terminals, the advertisement information that each of the mobile terminals should deliver.

2. The geographical position-based Internet outdoor advertisement delivery system according to claim 1, the smart outdoor advertisement terminal comprising an automobile projection display arranged on an automobile, a smart liquid crystal billboard arranged in a public place, and various kinds of outdoor LED billboards.

3. A delivery method for a geographical position-based Internet outdoor advertisement delivery system according to one of claims 1 and 2, **characterized in that** the method comprises the following steps:
in the first step, the Web server dividing an advertisement delivery region into a plurality of small square delivery areas and then publishing an advertisement regional bidding message to the advertiser Web platform;
in the second step, the advertiser Web platform providing advertisement design and advertisement bidding services, the user confirming a delivery area via the advertiser Web platform and then the advertiser Web platform transmitting the delivery area to the Web server, and the Web server analysing advertisement data and then providing quote information about the submitted advertisement for the advertiser Web platform;
in the third step, each of the mobile terminals continuously feeding a geographical position at which the mobile terminal is located back to the cloud server, the DSP mobile cloud server continuously accepting and determining the geographical position at which the mobile terminal is located and determining in real time which delivery area the geographical position where the mobile terminal is located belongs to and then transmitting the delivery area to the Web server via the database server, and the Web server designating advertisement information delivered by the mobile terminal and then sending the advertisement information to the mobile terminal via the DSP mobile cloud server; and
in the fourth step, the mobile terminal receiving the advertisement information transmitted by the DSP mobile cloud server, and sending the advertisement information to the smart outdoor advertisement terminal for delivery.

4. The delivery method for a geographical position-based Internet outdoor advertisement delivery system according to claim 3, **characterized in that** the Web server dividing the advertisement delivery region into a plurality of small square delivery areas is taking every 0.2 degree in longitude and every 0.2 degree in latitude as one unit based on the existing counties/districts, that is, as one delivery area.
